# EUROPEAN PATENT SPECIFICATION

(11) **EP 3 082 280 B1**
(45) Date of publication and mention of the grant of the patent: **25.07.2018**
(21) Application number: 16164556.9
(22) Date of filing: 08.04.2016
(51) Int. Cl.: H04H 60/33, H04H 60/74, H04H 60/37, H04H 60/65

(54) **METHOD AND APPARATUS FOR IDENTIFYING AUDIO INFORMATION**
VERFAHREN UND VORRICHTUNG ZUR IDENTIFIZIERUNG VON AUDIOINFORMATIONEN
PROCÉDÉ ET APPAREIL PERMETTANT D'IDENTIFIER DES INFORMATIONS AUDIO

(30) Priority: 15.04.2015 CN 201510178987
(43) Date of publication of application: 19.10.2016
(73) Proprietor: Xiaomi Inc., Beijing 100085 (CN)
(72) Inventor: LV, Lu, Haidian District Beijing 100085 (CN); LI, Shen, Haidian District Beijing 100085 (CN); GUO, Tao, Haidian District Beijing 100085 (CN)
(74) Representative: Reeve, Nicholas Edward

(56) References cited:
- WO-A2-2009/042697
- US-A- 3 919 479
- US-A1- 2002 073 179
- US-A1- 2002 135 618
- US-A1- 2006 184 960
- US-A1- 2010 057 781

## Description

### FIELD OF THE INVENTION

The disclosure relates to a technical field of audio identification, and in particular to a method and apparatus for identifying audio information.

### BACKGROUND

When listening to radio broadcast, a user usually cannot obtain relevant information of audio that he is listening to.

In order to enable the user to obtain the relevant information of the audio that he is listening to, some application program can identify a name, a singer, and lyrics of a song that the user is listening to, and present the identified name, signer, and lyrics of the song to the user.

US 2006/184960A1 discloses that at least one selected content identifier associated with a selected piece of content in a broadcast stream is captured, the at least one selected content identifier is resolved into a selected content information containing at least one of the information and the commerce opportunity for the selected piece of content, and then the selected content information is provided to a user who selected the content.

WO 2009/042697A2 discloses that an audio sample is obtained from a broadcast audio, the audio sample is processed into an audio fingerprint, the audio fingerprint is compared with pre-cached broadcast fingerprints to identify the broadcast audio, and then a personalized and interactive message is delivered to a user based on metadata of the identified broadcast audio.

US 2010/057781A1 discloses a medium signal is processed to generate a server recognizable code, the server recognizable code is matched with pre-stored reference codes, and corresponding media information is transmitted to the user if the server recognizable code matches with one of the reference codes.

### SUMMARY OF THE INVENTION

A method and apparatus for identifying audio information are provided.
In a first aspect of an embodiment of the disclosure, a method for identifying audio information is provided, the method comprising: identifying audio that is being played to obtain audio information of the audio; displaying links that are configured for keywords in the audio information on an information presentation interface; when the links are triggered, displaying prestored information corresponding to the keywords, wherein the processing of identifying audio that is being played to obtain audio information of the audio comprises: identifying the audio to obtain audio features of the audio, wherein the audio features are associated with text information and identity information of the audio, wherein when the audio is music audio the text information is lyrics corresponding to the audio, and the identity information, obtained using voice identification technology, is associated with a singer corresponding to the audio, and when the audio is language program audio the text information is program contents corresponding to the audio and the identity information, obtained using voice identification technology, is an entertainer corresponding to the audio; transmitting the identified audio features to a server, wherein the audio features are used to trigger the server to look up audio information matching with the audio features and feed back the audio information that is looked up; receiving the audio information fed back from the server.

In a second aspect of the embodiment of the disclosure, an apparatus for identifying audio information is provided, the apparatus comprising: a processor; a memory for storing instructions executable by the processor; wherein the processor is configured to carry out the method of the first aspect.

Technical solutions provided by the embodiment of the disclosure can achieve the following technical effects:
The audio information of the audio that is being played is obtained by identifying the audio, the links that are configured for the keywords in the audio information are displayed, and the prestored information corresponding to the keywords is displayed when the links are triggered. As more information corresponding to the audio can be displayed by providing the links, the problem that information to be displayed is relatively less due to displaying the audio information merely within a single interface is solved, and the effect of improving diversity of the audio information is achieved.

It should be appreciated that the above general descriptions and the following detailed descriptions are merely illustrative, and are not intended to limit the disclosure.

### DESCRIPTION OF THE DRAWINGS

The accompany drawings that are incorporated into the specification and constitute parts of the specification illustrate embodiments of the disclosure, and are used to explain the principle of the disclosure in combination with the specification.
Fig. 1 is a flow chart illustrating a method for identifying audio information in accordance with an exemplary embodiment;
Fig. 2A is a flow chart illustrating a method for identifying audio information in accordance with another exemplary embodiment;
Fig. 2B is a flow chart illustrating a method for obtaining audio information in accordance with an exemplary embodiment;
Fig. 2C is a diagram illustrating the displaying of audio information and links in accordance with an exemplary embodiment;
Fig. 2D is a diagram illustrating the displaying of jump pages in accordance with an exemplary embodiment;
Fig. 3A is a flow chart illustrating a method for playing or downloading audio that is being listened to in accordance with an exemplary embodiment;
Fig. 3B is diagram illustrating the displaying of a play link and a download link for audio in accordance with an exemplary embodiment;
Fig. 4A is a flow chart illustrating a method for searching for a keyword in audio information in accordance with an exemplary embodiment;
Fig. 4B is a diagram illustrating the displaying of search results corresponding to a keyword in accordance with an exemplary embodiment;
Fig. 5 is a block diagram illustrating an apparatus for identifying audio information in accordance with an exemplary embodiment;
Fig. 6 is a block diagram illustrating an apparatus for identifying audio information in accordance with another exemplary embodiment;
Fig. 7 is a block diagram illustrating an apparatus for identifying audio information in accordance with an exemplary embodiment.

### DETAILED DESCRIPTION

Exemplary embodiments will be described in detail herein, wherein examples of the embodiments are shown in the accompany drawings. In the drawings, like reference numbers denote similar or same elements throughout different views, unless otherwise stated. The implementations described in the following exemplary embodiments do not represent all implementations in accordance with the disclosure. In contrary, the implementations are merely examples of the apparatuses and methods that are recited in the claims in accordance with some aspects of the disclosure.

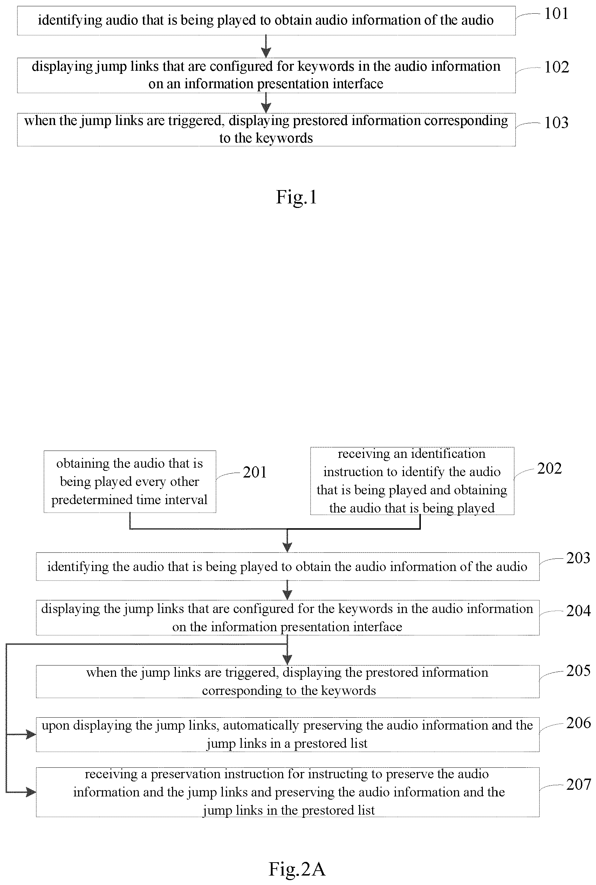

Fig. 1 is a flow chart illustrating a method for identifying audio information in accordance with an exemplary embodiment. The method for identifying audio information shown in fig. 1 is applicable to an electronic device, which can be a smart phone, a tablet computer, a smart television, an electronic-book reader, a multimedia player, a laptop portable computer, a desktop computer and so on. The method for identifying audio information can comprise the following steps:
In step 101, audio that is being played is identified to obtain audio information of the audio.
In step 102, links that are configured for keywords in the audio information are displayed on an information presentation interface.
In step 103, when the links are triggered, prestored information corresponding to the keywords is displayed. In this context, "links" will be understood to mean a selectable computer instruction presented on the screen of the electronic device to cause a browser or other file navigation device running on the electronic device to access and present information contained in a further file or resource. Links may generally be referred to as hyperlinks or URLs (Uniform Resource Locators). Usually, such links are presented as selectable text items or selectable images.

To sum up, in the method for identifying audio information provided in the embodiment of the disclosure, the audio information of the audio that is being played is obtained by identifying the audio, the links that are configured for the keywords in the audio information are displayed, and the prestored information corresponding to the keywords is displayed when the links are triggered. As more information corresponding to the audio can be displayed by providing the links, the problem that information to be displayed is relatively less due to displaying the audio information merely within a single interface is solved, and the effect of improving diversity of the audio information is achieved.

Fig. 2A is a flow chart illustrating a method for identifying audio information in accordance with another exemplary embodiment. The method for identifying audio information shown in fig. 2A is applicable to the electronic device, which can be the smart phone, the tablet computer, the smart television, the electronic-book reader, the multimedia player, the laptop portable computer, the desktop computer and so on. The method for identifying audio information can comprise the following steps. Before identifying the audio that is being played, it is required for the electronic device to obtain the audio that is being played. In order to satisfy different requirements, it is also required to correspondingly adjust the way that the electronic device obtains the audio that is being played. Please refer to the following steps 201-202.

In step 201, the audio that is being played is obtained every predetermined time interval.

Here, the audio that is being played can be audio that is being played by the electronic device by receiving radio broadcast, or audio that is being played by another device near the electronic device (at this time, the electronic device can obtain the audio that is being played by the other device). The audio can be music audio, language program audio, or book audio.

The electronic device can obtain the audio that is being played every predetermined time interval, which can be for example, 3 minutes, 4 minutes or 5 minutes, set by a user.

Alternatively, in order to reduce power consumption of the electronic device, the electronic device can obtain the audio that is being played upon detecting that a change exceeding a predetermined threshold occurs in the rhythm of the audio. For example, in the music audio as an example of the audio, a period of time usually exists after a song is completely played and before next song is played, and the rhythm of the audio during the period of time is significantly different from that when the song is being played. Therefore, when the electronic device detects that the change exceeding the predetermined threshold occurs in the rhythm of the audio, which means that the song that is being played is switched, the audio obtained by the electronic device at the moment is the audio of the switched song.

In step 202, an identification instruction to identify the audio that is being played is received, and the audio that is being played is obtained.

In order to satisfy requirements of the user better and reduce the power consumption of the electronic device due to frequent audio identification, the electronic device can obtain the audio that is being played upon receiving the identification instruction triggered by the user to identify the audio that is being played.

In an implementation scenario, when the user is listening to radio broadcast by using the electronic device and founds that the audio that is being played is enjoyable and wishes to obtain relevant information of the audio, the user can trigger the generation of the identification instruction to identify the audio that is being played on the electronic device, and the electronic device will obtain the audio that is being played upon receiving the identification instruction.

In another implementation scenario, when another device is playing audio and the user wishes to obtain the relevant information of the audio that is being played by the other device, the user can turn on its own electronic device and triggers the generation of the identification instruction to identify the audio that is being played on the electronic device, and the electronic device will obtain the audio that is being played upon receiving the identification instruction.

Alternatively, when triggering the generation of the identification instruction to identify the audio that is being played on the electronic device, the user can trigger an identification control on the electronic device to generate the identification instruction, or trigger a specific hardware (for example, a volume key) of the electronic device to generate the identification instruction.In step 203, the audio that is being played is identified to obtain the audio information of the audio.

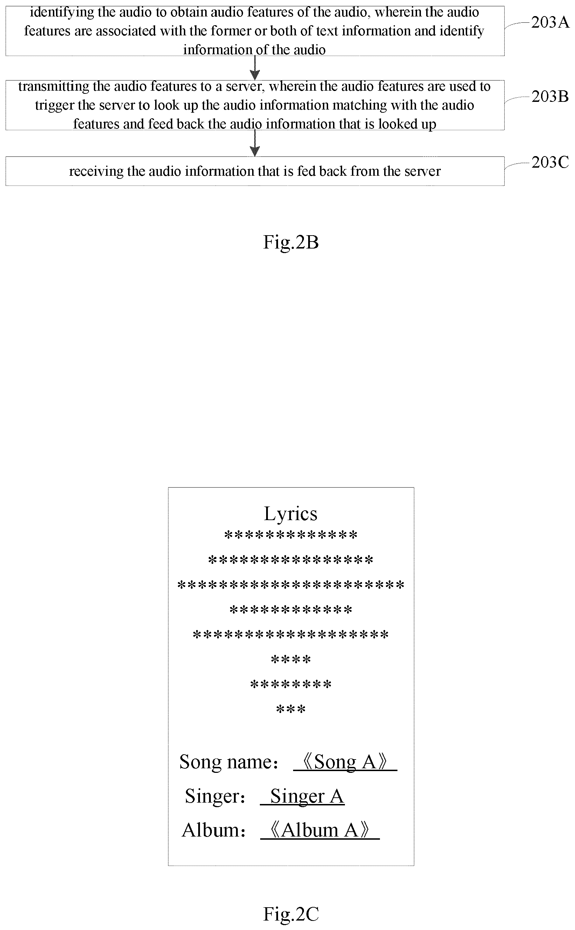

When identifying the audio that is being played, the electronic device can identify audio features of the audio and then transmit the audio features to a server for matching by the server so as to obtain the audio information. Please refer to the following steps 203A-203C for specific details. Furthermore, please refer to fig. 2b, which is a flow chart illustrating a method for obtaining audio information in accordance with an exemplary embodiment.

In step 203A, the audio is identified to obtain the audio features of the audio, wherein the audio features are associated with the former or both of text information and identify information of the audio.

The electronic device identifies the audio that is being played to obtain the audio features of the audio. The audio features may be associated text information, tone or pitch features and so on occurring in the audio. If the audio is identified by a voice identification technology, the audio features are further associated with the identity information of the audio. For example, when the obtained audio is the music audio, the obtained text information is lyrics corresponding to the obtained audio, and the identity information obtained by means of voice identification is a singer corresponding to the audio; when the obtained audio is the language program audio, the obtained text information is program contents corresponding to the obtained audio, and the identity information obtained by means of voice identification is an entertainer corresponding to the audio.

Identification of the audio that is being played may be achieved using an audio recognition algorithm.. The device, which is playing the audio or is near another device playing the audio, may use the audio recognition algorithm to detect the identity of the audio directly, so that the user can obtain the identified information of the audio, whatever he or she is listening to. For example, the identity of the audio may be determined by an audio matching algorithm in which one or more properties of at least a portion of the audio is compared with audio data on a database (e.g. a central database) of previously identified audio data and a match made. Such algorithms are available freely.

In step 203B, the audio features are transmitted to the server, wherein the audio features are used to trigger the server to look up the audio information matching with the audio features and feed back the audio information that is looked up.

The electronic device transmits the obtained audio features to the server. The server can look up the audio information matching with the audio features in a prestored database, and feed back the audio information matching with the audio features to the electronic device after the audio information is looked up.

The audio information can comprise owner information of the audio corresponding to the audio features, an audio name corresponding to the audio, and so on. For example, when the audio that is being played is the music audio, the audio information can comprise a song name, an album name, a singer name, lyrics and so on; when the audio that is being played is the language program audio, the audio information can comprise a program name, an entertainer name and so on; when the audio that is being played is the book audio, the audio information can comprise a book author name, a book name, a chapter directory and so on.

In step 203C, the audio information fed back from the server is received.

In step 204, the links that are configured for the keywords in the audio information are displayed on the information presentation interface.

The electronic device can configure the links for the keywords in the audio information upon receiving the audio information fed back from the server, so as to facilitate the user obtaining more information via the links.

Here, the keywords can be keywords capable of indicating primary features of the audio. For example, when the audio that is being played is the music audio, the keywords can be the song name, the singer name, the album name and so on; when the audio that is being played is the language program audio, the keywords can be the program name, the entertainer name and so on; when the audio that is being played is the book audio, the keywords can be the book author name, the book name and so on.

For example, please refer to fig. 2C, which is a diagram illustrating the displaying of audio information and links in accordance with an exemplary embodiment. Fig. 2C takes the music audio as an example, in which the audio information received by the electronic device is "Song name: <Song A>", "Singer: Singer A", "Album: <Album A>", and lyrics corresponding to Song A. The electronic device configures the links for "<Song A>", "Singer A", and "Album A" respectively, and displays "Song name: <Song A>", "Singer: Singer A", "Album: <Album A>", and lyrics corresponding to Song A on the information presentation interface.

In step 205, when the links are triggered, the prestored information corresponding to the keywords is displayed.

When the links on the information presentation interface are triggered, the electronic device displays the prestored information corresponding to the keywords, wherein the prestored information usually is detailed information prestored with respect to the keywords. For example, when the audio that is being played is the music audio and the link for the singer name is triggered, the electronic device jumps to a page displaying detailed materials of the singer; when the audio that is being played is the language program audio, and the link for the program name is triggered, the electronic device jumps to a page displaying detailed instructions for the program; when the audio that is being played is the book audio, and the link for the book author is triggered, the electronic device jumps to a page displaying a column of the book author.

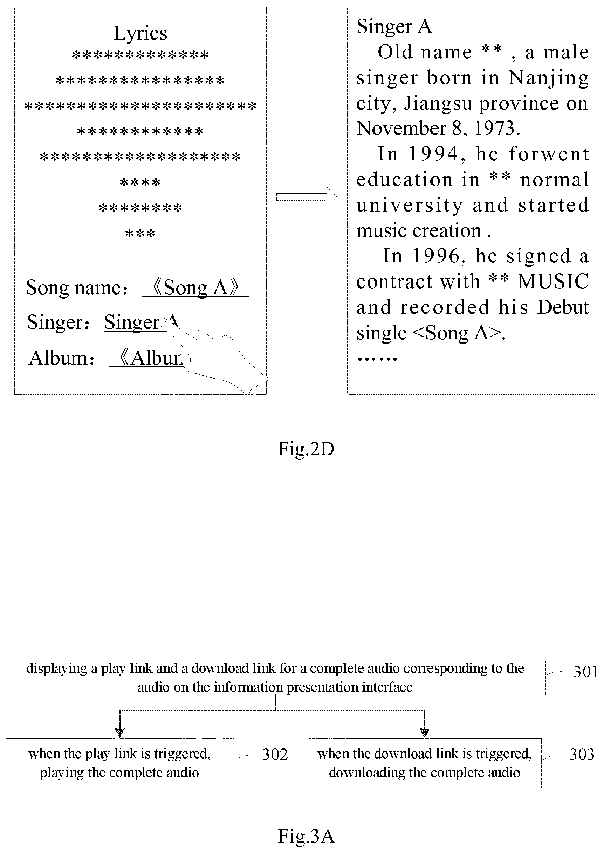

For example, please refer to fig. 2D, which is a diagram illustrating the displaying of jump pages in accordance with an exemplary embodiment. Fig. 2D also takes the music audio as an example, in which when "Singer A" on the information presentation interface is triggered, the electronic device jumps to the page displaying the detailed materials of Singer A.

In order to facilitate the user consulting the obtained audio information, the electronic device can correspondingly store the audio information and the links upon displaying the links that are configured for the keywords in the audio information on the information presentation interface. Please refer to the following steps 206-207.

In step 206, when the links are displayed, the audio information and the links are automatically stored in a prestored list.

Upon displaying the links that are configured for the keywords in the audio information and the audio information on the information presentation interface, the electronic device can automatically store the audio information and the links in the prestored list. The user can look up the stored audio information in the prestored list.

In step 207, a preservation instruction for instructing to store the audio information and the links is received, and the audio information and the links are stored in the prestored list.

Upon displaying the links that are configured for the keywords in the audio information and the audio information on the information presentation interface, the electronic device can ask the user whether to store the audio information and the links, and store the audio information and the links in the prestored list upon receiving the preservation instruction for instructing to store the audio information and the links.

Alternatively, the electronic device can display a preservation control for storing the audio information and the links on the information presentation interface, and store the audio information and the links in the prestored list upon detecting that the preservation control is triggered.

In an implementation scenario, when a vehicle-mounted system of the user is receiving radio broadcast and playing a song, the user can identify the audio that is being played by using the vehicle-mounted system or a portable smart phone, and the vehicle-mounted system or the portable smart phone can obtain the audio information of the audio, display the links that are configured for the keywords in the audio information on the information presentation interface, and display the prestored information corresponding to the keywords when the user triggers the links. If the links are displayed by the vehicle-mounted system, in order to avoid affecting the user driving a vehicle due to the user concentrating on the links or the prestored information corresponding to the links displayed on the vehicle-mounted system, the vehicle-mounted system can automatically store the links and the audio information in the prestored list so as to facilitate the user browsing the links and the audio information in the prestored list when it is convenient for him. Obviously, the user can also trigger the preservation control for storing the audio information and the links, and the vehicle-mounted system or the portable mobile phone can store the audio information and the links in the prestored list for browsing by the user when it is convenient for him upon receiving the preservation instruction generated by the user triggering the preservation control.

To sum up, in the method for identifying audio information provided in the embodiment of the disclosure, the audio information of the audio that is being played is obtained by identifying the audio, the links that are configured for the keywords in the audio information are displayed, and the prestored information corresponding to the keywords is displayed when the links are triggered. As more information corresponding to the audio can be displayed by providing the links, the problem that information to be displayed is relatively less due to displaying the audio information merely within a single interface is solved, and the effect of improving diversity of the audio information is achieved.

Furthermore, the audio information and the links are stored in the prestored list, and the audio information of the identified audio can be looked up in the prestored list, so the problem that the user cannot consult the audio information of the recently identified audio is solved, and the effect of improving the convenience of looking up the audio information is achieved.

In order to facilitate the user enjoying the audio that he is listening to once again or collecting the audio that he is listening to, when displaying the links that are configured for the keywords in the audio information, the electronic device can also display a play link and a download link for a complete audio corresponding to the audio. Please refer to fig. 3A, which is a flow chart illustrating a method for playing or downloading audio that is being listened to in accordance with an exemplary embodiment.

In step 301, the play link and the download link for the complete audio corresponding to the audio are displayed on the information presentation interface.

The electronic device can obtain the play link and the download link for the complete audio corresponding to the audio in accordance with the obtained audio information, and display the play link and the download link on the information presentation interface.

For example, when the obtained audio information comprises the song name, the play link and the download link for the song corresponding to the song name are displayed; when the obtained audio information comprises the program name, the play link and the download link for the language program audio corresponding to the program name are displayed; when the obtained audio information comprise the book name, the play link and the download link for the book audio corresponding to the book name are displayed.

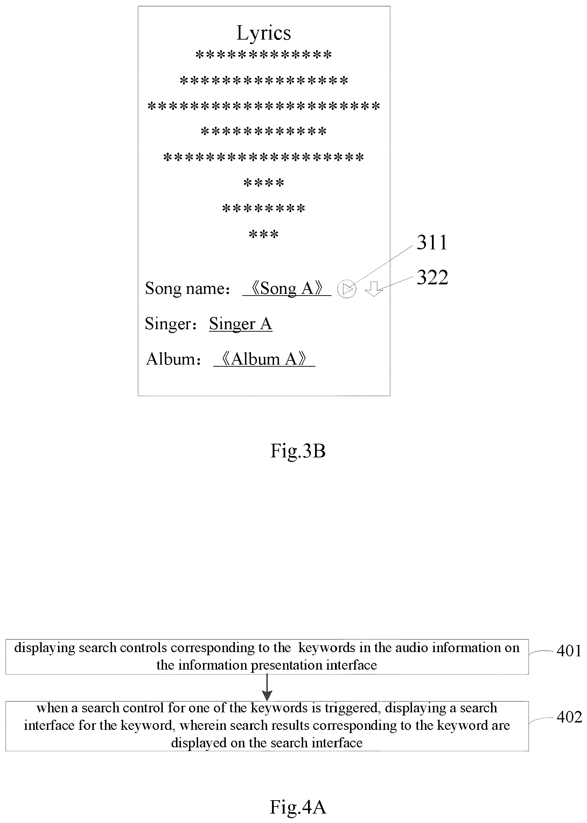

For example, please refer to fig. 3B, which is a diagram illustrating the displaying of a play link and a download link for audio in accordance with an exemplary embodiment. Fig. 3B takes the music audio as an example, in which the electronic device displays the play link 311 for playing Song A and the download link 322 for downloading Song A on the information presentation interface.

It should be noted that when the obtained audio information comprises the book name, the electronic device can also display the download link for downloading the book and the link for reading the book on line; when the obtained audio information comprises the program name, and there is a program video corresponding to the program name, the electronic device can also display the download link for downloading the program video and the play link for playing the program video.

In step 302, when the play link is triggered, the complete audio is played.

In step 303, when the download link is triggered, the complete audio is downloaded.

The electronic device plays the complete audio corresponding to the obtained audio upon detecting that the play link is triggered; the electronic device downloads the complete audio corresponding to the obtained audio upon detecting that the download link is triggered.

To sum up, in the above embodiment of the disclosure, the play link and the download link for the complete audio corresponding to the audio are displayed on the information presentation interface, and the complete audio is played when the play link is triggered and is downloaded when the download link is triggered. As the play link and the download link are provided on the information presentation interface, the problem that when the user wants to enjoy once again or collect the audio that he is listening to, it is required for him to perform complex operations of opening a corresponding program to search for the audio and then playing or downloading the audio is solved, and the effect of simplifying the operations and improving operation efficiency is achieved.

In order to facilitate the user further understanding the keywords in the audio information, the electronic device can further display search controls respectively corresponding to the keywords in the audio information while displaying the links that are configured for the keywords in the audio information. Please refer to fig. 4A, which is a flow chart illustrating a method for searching for a keyword in audio information.

In step 401, the search controls corresponding to the keywords in the audio information are displayed on the information presentation interface.

In order to display more information corresponding to the keywords so as to enable the user to further understand information related to the keywords, the electronic device can display the search controls corresponding to the keywords in the audio information on the information presentation interface.

In step 402, when the search control of a keyword is triggered, a search interface for the keyword is displayed, wherein the search interface displays search results corresponding to the keyword.

Upon detecting that the search control for a keyword on the information presentation interface is triggered, the electronic device displays the search interface for the keyword and displays the search results corresponding to the keyword on the search interface.

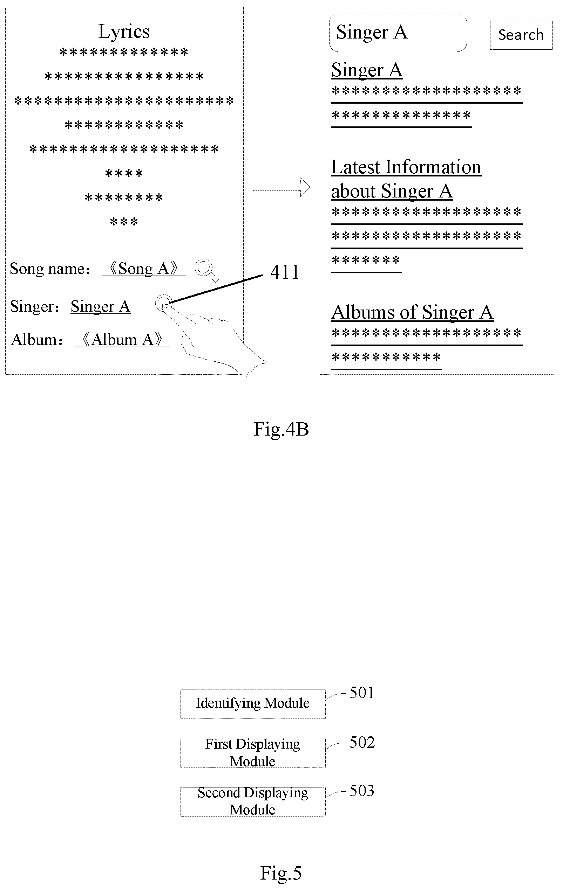

For example, please refer to fig. 4B, which is a diagram illustrating the displaying of search results corresponding to a keyword in accordance with an exemplary embodiment. Fig. 4B takes the music audio as an example, in which the electronic device displays the search interface corresponding to Singer A and displays the search results corresponding to Singer A on the search interface upon detecting that the search control 411 for Singer A is triggered.

To sum up, in the above embodiment of the disclosure, when the search control for a keyword is triggered, the search interface for the keyword is displayed, wherein the search interface displays the search results corresponding to the keyword. As the search controls for searching for the keywords are displayed on the information presentation interface, the problem that it is required to open another application program to search for the keywords and the number of operation steps is relatively large is solved, and the effect of simplifying the operations and improving operation efficiency is achieved.

It should be noted that the steps in fig. 2A and fig. 3A can be incorporated into an embodiment, the steps in fig. 2A and fig. 4A can be incorporated into an embodiment, and the steps in fig. 2A, fig.3A, and fig. 4A can be incorporated into an embodiment.

The following are apparatus embodiments of the disclosure, which can be used to implement the method embodiments of the disclosure. Please refer to the method embodiments for details that are not disclosed in the apparatus embodiments of the disclosure.

Fig. 5 is a block diagram illustrating an apparatus for identifying audio information in accordance with an exemplary embodiment. As shown in fig. 5, the apparatus for identifying audio information is applicable to the electronic device, which can be the smart phone, the tablet computer, the electronic-book reader, the multimedia player, the laptop portable computer, the desktop computer and so on. The apparatus for identifying audio information can comprises but is not limited to an identifying module 501, a first displaying module 502, and a second displaying module 503.

The identifying module 501 is configured to identify the audio that is being played to obtain the audio information of the audio.

The first displaying module 502 is configured to display the links that are configured for the keywords in the audio information obtained by the identifying module 501 on the information presentation interface.

The second displaying module 503 is configured to display the prestored information corresponding to the keywords when the links displayed by the first displaying module 502 are triggered.

To sum up, in the apparatus for identifying audio information provided in the embodiment of the disclosure, the audio information of the audio that is being played is obtained by identifying the audio, the links that are configured for the keywords in the audio information are displayed, and the prestored information corresponding to the keywords is displayed when the links are triggered. As more information corresponding to the audio can be displayed by providing the links, the problem that information to be displayed is relatively less due to displaying the audio information merely within a single interface is solved, and the effect of improving diversity of the audio information is achieved.

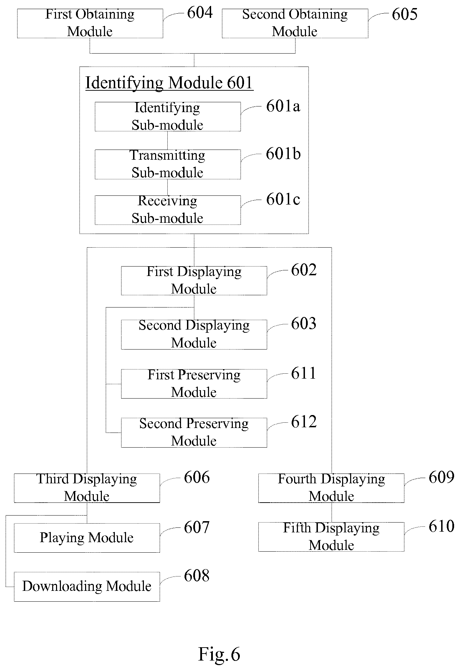

Fig. 6 is a block diagram illustrating an apparatus for identifying audio information in accordance with another embodiment of the disclosure. As shown in fig. 6, the apparatus for identifying audio information is applicable to the electronic device, which can be the smart phone, the tablet computer, the electronic-book reader, the multimedia player, the laptop portable computer, the desktop computer and so on. The apparatus for identifying audio information can comprise but is not limited to an identifying module 601, a first displaying module 602, and a second displaying module 603.

The identifying module 601 is configured to identify the audio that is being played to obtain the audio information of the audio.

The first displaying module 602 is configured to display the links that are configured for the keywords in the audio information obtained by the identifying module 601 on the information presentation interface.

The second displaying module 603 is configured to display the prestored information corresponding to the keywords when the links displayed by the first displaying module 602 are triggered.

In a possible embodiment, the identifying module 601 can comprise an identifying sub-module 601a, a transmitting sub-module 601b, and a receiving sub-module 601c.

The identifying sub-module 601a is configured to identify the audio to obtain the audio features of the audio, wherein the audio features are associated with the former or both of the text information and the identify information of the audio.

The transmitting sub-module 601b is configured to transmit the audio features obtained by the identifying sub-module 601a to the server, wherein the audio features are used to trigger the server to look up the audio information matching with the audio features and feed back the audio information that is looked up.

The receiving sub-module 601c is configured to receive the audio information fed back from the server.

In a possible embodiment, the apparatus for identifying audio information can further comprise a first obtaining module 604 or a second obtaining module 605.

The first obtaining module 604 is configured to obtain the audio that is being played every other predetermined time interval.

The second obtaining module 605 is configured to receive the identification instruction to identify the audio that is being played and obtain the audio that is being played.

In a possible embodiment, the apparatus for identifying audio information can further comprise a third displaying module 606, a playing module 607, and a downloading module 608.

The third displaying module 606 is configured to display the play link and the download link for the complete audio corresponding to the audio on the information presentation interface.

The playing module 607 is configured to play the complete audio when the play link displayed by the third displaying module 606 is triggered.

The downloading module 608 is configured to download the complete audio when the download link displayed by the third displaying module 606 is triggered.

In a possible embodiment, the apparatus for identifying audio information can further comprise a fourth displaying module 609 and a fifth displaying module 610.

The fourth displaying module 609 is configured to display the search controls corresponding to the keywords in the audio information on the information presentation interface.

The fifth displaying module 610 is configured to display the search interface for a keyword displayed by the fourth displaying module 609 when the search control for the keyword is triggered, wherein the search interface displays the search results corresponding to the keyword.

In a possible embodiment, the apparatus for identifying audio information can further comprise a first storing module 611 or a second storing module 612.

The first storing module 611 is configured to automatically store the audio information and the links in the prestored list upon displaying the links.

The second storing module 612 is configured to receive the preservation instruction for instructing to store the audio information and the links and store the audio information and the links in the prestored list.

To sum up, in the apparatus for identifying audio information provided in the embodiment of the disclosure, the audio information of the audio that is being played is obtained by identifying the audio, the links that are configured for the keywords in the audio information are displayed, and the prestored information corresponding to the keywords is displayed when the links are triggered. As more information corresponding to the audio can be displayed by providing the links, the problem that information to be displayed is relatively less due to displaying the audio information merely within a single interface is solved, and the effect of improving diversity of the audio information is achieved.

Furthermore, the audio information and the links are stored in the prestored list, and the audio information of the identified audio can be looked up in the prestored list. So the problem that the user cannot consult the audio information of the recently identified audio is solved, and the effect of improving the convenience of looking up the audio information is achieved.

Furthermore, the play link and the download link for the complete audio corresponding to the audio are displayed on the information presentation interface, and the complete audio is played when the play link is triggered and is downloaded when the download link is triggered. As the play link and the download link are provided on the information presentation interface, the problem that when the user wants to enjoy once again or collect the audio that he is listening to, it is required for him to perform complex operations of opening a corresponding program to search for the audio and then playing or downloading the audio is solved, and the effect of simplifying the operations and improve operation efficiency is achieved.

Furthermore, when the search control for a keyword is triggered, the search interface for the keyword is displayed, wherein the search interface displays the search results corresponding to the keyword. As the search controls for searching for the keywords are displayed on the information presentation interface, the problem that it is required to open another application program to search for the keywords and the number of operation steps is relatively large is solved, and the effect of improving operation efficiency is achieved.

Specific ways that respective modules in the apparatuses in the above embodiments perform operations have already been described in detail in the method embodiments, and thus are not redundantly described herein.

An embodiment of the disclosure provides an apparatus for identifying audio information capable of implementing the methods for identifying audio information provided by the disclosure, the apparatus comprising a processor and a memory for storing instructions executable by the processor, wherein the processor is configured to identify the audio that is being played to obtain the audio information of the audio; display the links that are configured for the keywords in the audio information on the information presentation interface; when the links are triggered, display the prestored information corresponding to the keywords.

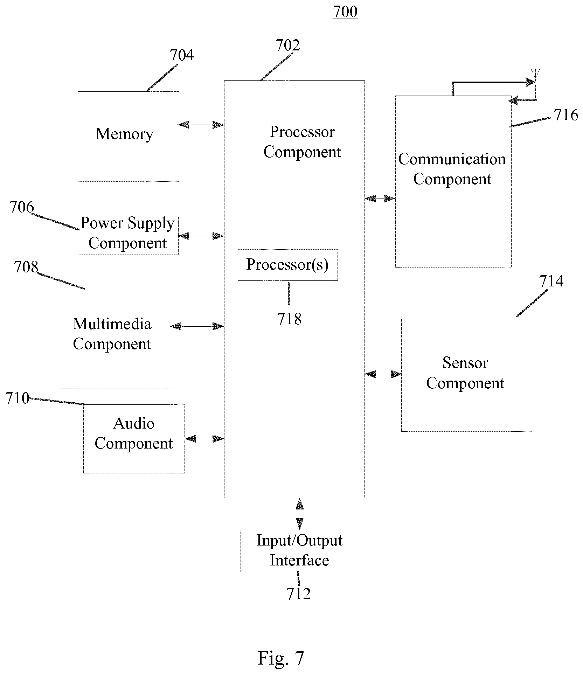

Fig. 7 is a block diagram illustrating an apparatus for identifying audio information in accordance with an exemplary embodiment. For example, the apparatus 700 can be a mobile phone, a computer, a digital broadcast terminal, a message transceiver, a game console, a tablet device, a fitness facility, a personal digital assistant and so on.

As shown in fig. 7, the apparatus 700 can comprise one or more of a processor component 702, a memory 704, a power supply component 706, a multimedia component 708, an audio component 710, an input/output (I/O) interface 712, a sensor component 714, and a communication component 716.

The processor component 702 usually controls operations of the whole apparatus 700, for example, operations related to display, telephone call, data communication, camera operation and recording operation and so on. The processor component 702 can comprises one or more processors 718 to execute instructions so as to implement all or part of the steps of the above methods. Moreover, the processor component 702 can comprise one or more modules for facilitating interactions between the processor component 702 and other components. For example, the processor component 702 can comprise a multimedia module for facilitating interactions between the multimedia component 708 and the processor component 702.

The memory 704 is configured to store various types of data for supporting operations of the apparatus 700. Examples of the data comprise instructions of any application program or method operating on the apparatus 700, contact data, directory data, messages, pictures, videos and so on. The memory 704 can be implemented by any type of volatile or non-volatile storages or the combination thereof, for example, Static Random Access Memories (SRAMs), Electrically Erasable Programmable Read-Only Memories (EEPROMs), Erasable Programmable Read-Only Memories (EPROMs), Programmable Read-Only Memories (PROMs), Read-Only Memories (ROMs), magnetic memories, flash memories, magnetic disks or optical disks.

The power supply component 706 supplies power for various components of the apparatus 700. The power supply component 706 can comprise a power supply management system, one or more power supplies, and other components associated with power generation, management and assignment for the apparatus 700.

The multimedia component 708 comprises a screen for providing an output interface between the apparatus 700 and the user. In some embodiments, the screen can comprise a liquid crystal display (LCD) and a touch panel (TP). If the screen comprises the touch panel, the screen can be implemented as a touch sensitive screen to receive input signals from the user. The touch panel comprises one or more touch sensors for sensing touch, slide, and gestures on the touch panel. The touch sensors can not only sense boundaries of a touch or slide action, but also detect duration and pressure related to a touch or slide operation. In some embodiments, the multimedia component 708 comprises a front camera and/or a rear camera. When the apparatus 700 is in operation (for example, in a camera mode or a video mode), the front camera and/or the rear camera can receive multimedia data from external. Each of the front camera and the rear camera can be a fixed optical lens system or has a focus and optical zoom capability.

The audio component 710 is configured to output and/or input audio signals. For example, the audio component 710 comprises a microphone (MIC). When the apparatus 700 is in operation (for example, in a call mode, a recording mode, or a voice identification mode), the microphone is configured to receive the audio signals from external. The received audio signals can be further stored in the memory 704 or transmitted via the communication component 716. In some embodiments, the audio component 710 further comprises a speaker for outputting the audio signals.

The I/O interface 712 provides an interface between the processor component 702 and peripheral interface modules such as a keyboard, a click wheel, buttons and so on. The buttons can comprise but are not limited to homepage buttons, volume buttons, start buttons and lock buttons.

The sensor component 714 comprises one or more sensors for providing various aspects of state elevations for the apparatus 700. For example, the sensor component 714 can detect On/Off state of the apparatus 700, and relative positions of the components (for example, a display and a keypad of the apparatus 700). The sensor component 714 can further detect the change of position of the apparatus 700 or a component of the apparatus 700, the presence of the touching by the user on the apparatus 700, location or acceleration/deceleration of the apparatus 700, and temperature change of the apparatus 700. The sensor component 714 can comprise a proximity sensor configured to detect the presence of a neighboring object without any physical touch. The sensor component 714 can further comprise an optical sensor such as a CMOS or CCD image sensor applicable for imaging. In some embodiments, the sensor component 714 can further comprise an acceleration sensor, a gyroscope sensor, a magnetic sensor, a pressure sensor or a temperature sensor.

The communication component 716 is configured to facilitate wireless or wire communication between the apparatus 700 and other devices. The apparatus 700 can access wireless networks based on communication standards such as 2G, 3G, or the combination thereof. In an exemplary embodiment, the communication component 716 receives broadcast signals or broadcast related information from an external broadcast management system via a broadcast channel. In an exemplary embodiment, the communication component 716 further comprises a near field communication (NFC) module for facilitating short range communication. For example, the NFC module can be implemented based on a Radio Frequency Identification (RFID) technology, an Infrared Data Association (IrDA) technology, an Ultra Wideband (UWB) technology, a Blue Tooth (BT) technology and other technologies.

In an exemplary embodiment, the apparatus 700 can be implemented by one or more Application Specific Integrated Circuits (ASICs), Digital Signal Processors (DSPs), Digital Signal Processing Devices (DSPDs), Programmable Logic Devices (PLDs), Field-Programmable Gate Arrays (FPGAs), controllers, microcontrollers, microprocessors, or other electronic elements so as to implement the above methods for identifying audio information.

In an exemplary embodiment, a non-temporary computer readable storage medium (for example, the memory 704 comprising instructions) comprising instructions executable by the processor 718 of the apparatus 700 to implement the above methods for identifying audio information is provided. For example, the non-temporary computer readable storage medium can be a ROM, a Random Access Memory (RAM), a CD-ROM, a magnetic tape, a floppy disk, an optical data storage device and so on.

The person skilled in the art will readily think of other embodiments of the disclosure upon considering the specification and practicing the invention disclosed herein. The application is intended to cover any modifications, usages or adaptive variations of the disclosure, wherein the modifications, usages or adaptive variations follow general principles of the disclosure and comprise common sense or customary technical means in the art that are not disclosed in the disclosure. The specification and embodiments are merely considered as illustrative, and the scopes of the disclosure are limited by the following claims.

It should be noted that the disclosure is not limited to the precise structures described above and shown in the accompany drawings, and can be modified and changed without departing the scopes of the disclosure. The scopes of the disclosure are limited merely by the accompanying claims.

## Claims

1. A method for identifying audio information, **characterized by** comprising:
identifying audio that is being played to obtain audio information of the audio (101);
displaying links that are configured for keywords in the audio information on an information presentation interface (102);
when the links are triggered, displaying prestored information corresponding to the keywords (103), wherein:
the processing of identifying audio that is being played to obtain audio information of the audio comprises:
identifying the audio to obtain audio features of the audio, wherein:
the audio features are text information and identity information of the audio;
the audio is music audio or language program audio and when the audio is music audio the text information is lyrics corresponding to the audio and the identity information, obtained using voice identification technology, is a singer corresponding to the audio, and when the audio is language program audio the text information is program contents corresponding to the audio and the identity information, obtained using voice identification technology, is an entertainer corresponding to the audio (203A);
transmitting the identified audio features to a server, wherein the audio features are used to trigger the server to look up audio information matching with the audio features and feed back the audio information that is looked up (203B);
receiving the audio information fed back from the server (203C).

2. The method of claim 1, further comprising:
obtaining the audio that is being played every predetermined time interval (201); or
receiving an identification instruction to identify the audio that is being played and obtaining the audio that is being played (202).

3. The method of any of claims 1 to 2, further comprising:
displaying a play link and a download link for the complete audio corresponding to the audio information on the information presentation interface (301);
when the play link is triggered, playing the complete audio (302);
when the download link is triggered, downloading the complete audio (303).

4. The method of any of claims 1 to 3, further comprising:
displaying search controls corresponding to the keywords in the audio information on the information presentation interface (401);
when a search control for one of the keywords is triggered, displaying a search interface for the keyword, wherein search results corresponding to the keyword are displayed on the search interface (402).

5. The method of any of claims 1 to 4, further comprising:
upon displaying the links, automatically storing the audio information and the links in a prestored list (206); or
receiving a storage instruction for instructing to store the audio information and the links and storing the audio information and the links in the prestored list (207).

6. An apparatus for identifying audio information, comprising:
a processor (702);
a memory (704) for storing instructions executable by the processor;
wherein the processor is configured to perform the method of any of claims 1 to 5.

7. A computer program including instructions which cause a computer to carry out the steps of a method for identifying audio information according to any one of claims 1 to 5 when said program is executed by the computer.

8. A recording medium readable by a computer and having recorded thereon a computer program including instructions which, when executed by a computer, cause the computer to carry out the steps of a method for identifying audio information according to any one of claims 1 to 5.

## Patentansprüche

1. Verfahren zum Identifizieren von Audioinformationen, **dadurch gekennzeichnet, dass** es Folgendes aufweist:
Identifizieren von Audio, das abgespielt wird, um Audioinformationen über das Audio zu erhalten, (101);
Anzeigen von Links, die für Schlüsselwörter in den Audioinformationen konfiguriert sind, auf einer Informationsdarstellungsschnittstelle (102);
bei Auslösen der Links Anzeigen von vorgespeicherten Informationen, die den Schlüsselwörtern entsprechen, (103), wobei:
die Verarbeitung des Identifizierens von Audio, das abgespielt wird, um Audioinformationen über das Audio zu erhalten, Folgendes aufweist:
Identifizieren des Audios zum Erhalten von Audiomerkmalen des Audios, wobei:
die Audiomerkmale Textinformationen und Identitätsinformationen des Audios sind;
das Audio Musikaudio oder Sprachsendungsaudio ist und, wenn das Audio Musikaudio ist, die Textinformationen Liedertexte sind, die dem Audio entsprechen, und die durch Verwendung von Sprachidentifikationstechnologie erhaltenen Identitätsinformationen ein dem Audio entsprechender Sänger sind, und, wenn das Audio Sprachsendungsaudio ist, die Textinformationen Programminhalt sind, der dem Audio entspricht, und die unter Verwendung von Sprachidentifikationstechnologie erhaltenen Identitätsinformationen ein dem Audio entsprechender Unterhalter sind (203A);
Übertragen der identifizierten Audiomerkmale an einen Server, wobei die Audiomerkmale zum Auslösen des Servers zum Suchen von Audioinformationen, die mit den Audiomerkmalen übereinstimmen, und zum Zurückmelden der gesuchten Audioinformationen verwendet werden (203B);
Empfangen der vom Server zurückgemeldeten Audioinformationen (203C).

2. Verfahren nach Anspruch 1, das ferner aufweist:
Erhalten des Audios, das abgespielt wird, zu jedem vorbestimmten Zeitintervall (201); oder
Empfangen einer Identifizierungsanweisung zum Identifizieren des Audios, das abgespielt wird, und Erhalten des Audios, das abgespielt wird, (202).

3. Verfahren nach einem der Ansprüche 1 oder 2, das ferner aufweist:
Anzeigen eines Abspiellinks und eines Download-Links für das vollständige Audio, die den Audioinformationen auf der Informationsdarstellungsschnittstelle entsprechen, (301);
bei Auslösen des Abspiellinks Abspielen des vollständigen Audios (302);
bei Auslösen des Download-Links Herunterladen des vollständigen Audios (303).

4. Verfahren nach einem der Ansprüche 1 bis 3, das ferner aufweist:
Anzeigen von Suchsteuerungselementen, die den Schlüsselwörtern in den Audioinformationen entsprechen, auf der Informationsdarstellungsschnittstelle (401);
bei Auslösen eines Suchsteuerungselements für eines der Schlüsselwörter Anzeigen einer Suchschnittstelle für das Schlüsselwort, wobei dem Schlüsselwort entsprechende Suchergebnisse auf der Suchschnittstelle anzeigt werden (402).

5. Verfahren nach einem der Ansprüche 1 bis 4, das ferner aufweist:
bei Anzeigen der Links automatisches Speichern der Audioinformationen und der Links in einer vorgespeicherten Liste (206) und
Empfangen einer Speicheranweisung zum Anweisen zum Speichern der Audioinformationen und der Links und Speichern der Audioinformationen und der Links in der vorgespeicherten Liste (207) .

6. Vorrichtung zum Identifizieren von Audioinformationen, die aufweist:
einen Prozessor (702);
einen Speicher (704) zum Speichern von durch den Prozessor ausführbaren Anweisungen;
wobei der Prozessor zum Durchführen des Verfahrens nach einem der Ansprüche 1 bis 5 konfiguriert ist.

7. Computerprogramm mit Anweisungen, die einen Computer beim Ausführen des genannten Programms durch den Computer zum Durchführen der Schritte eines Verfahrens zum Identifizieren von Audioinformationen nach einem der Ansprüche 1 bis 5 veranlassen.

8. Aufzeichnungsmedium, das von einem Computer gelesen werden kann und auf dem ein Computerprogramm mit Anweisungen aufgezeichnet ist, die bei Ausführung durch einen Computer den Computer zum Durchführen der Schritte eines Verfahrens zum Identifizieren von Audioinformationen nach einem der Ansprüche 1 bis 5 veranlassen.

## Revendications

1. Procédé d'identification d'informations audio, **caractérisé en ce qu'**il comprend :
l'identification d'un contenu audio qui est reproduit pour obtenir des informations audio du contenu audio (101) ;
l'affichage de liens qui sont configurés pour des mots-clés dans les informations audio sur une interface de présentation d'informations (102) ;
quand les liens sont déclenchés, l'affichage d'informations prémémorisées correspondant aux mots-clés (103), dans lequel :
le traitement de l'identification d'un contenu audio qui est reproduit pour obtenir des informations audio du contenu audio comprend :
l'identification du contenu audio pour obtenir des caractéristiques audio du contenu audio, dans lequel :
les caractéristiques audio sont des informations de texte et des informations d'identité du contenu 'audio ;
le contenu audio est un contenu audio musical ou un contenu audio d'un programme linguistique et quand le contenu audio est un contenu audio musical les informations de texte sont des paroles correspondant au contenu audio et les informations d'identité, obtenues à l'aide d'une technologie d'identification vocale, sont celles d'un chanteur correspondant au contenu audio, et quand le contenu audio est un contenu audio de programme linguistique les informations de texte sont un contenu de programme correspondant au contenu audio et les informations d'identité, obtenues à l'aide de la technologie d'identification vocale, sont celles d'un animateur correspondant au contenu audio (203A) ;
la transmission des caractéristiques audio identifiées à un serveur, dans lequel les caractéristiques audio sont utilisées pour déclencher le serveur afin de consulter des informations audio correspondant aux caractéristiques audio et renvoyer les informations audio qui sont consultées (203B) ;
la réception des informations audio renvoyées par le serveur (203C).

2. Procédé selon la revendication, comprenant en outre :
l'obtention du contenu audio qui est reproduit à chaque intervalle de temps prédéterminé (201) ; ou
la réception d'une instruction d'identification pour identifier le contenu audio qui est reproduite et obtenir le contenu audio qui est reproduit (202).

3. Procédé selon l'une quelconque des revendications 1 à 2, comprenant en outre :
l'affichage d'un lien de reproduction et d'un lien de téléchargement pour la totalité du contenu audio correspondant aux informations audio sur l'interface de présentation d'informations (301) ;
quand le lien de reproduction est déclenché, la reproduction de la totalité du contenu audio (302) ;
quand le lien de téléchargement est déclenché, le téléchargement de la totalité du contenu audio (303).

4. Procédé selon l'une quelconque des revendications 1 à 3, comprenant en outre :
l'affichage de commandes de recherche correspondant aux mots-clés dans les informations audio sur l'interface de présentation d'informations (401) ;
quand une commande de recherche de l'un des mots-clés est déclenchée, l'affichage d'une interface de recherche du mot-clé, dans lequel les résultats de recherche correspondant au mot-clé sont affichés sur l'interface de recherche (402).

5. Procédé selon l'une quelconque des revendications 1 à 4, comprenant en outre :
à l'affichage des liens, la mémorisation automatique des informations audio et des liaisons dans une liste prémémorisée (206) ; ou
la réception d'une instruction de mémorisation pour ordonner la mémorisation des informations audio et des liens et la mémorisation des informations audio et des liaisons dans la liste prémémorisée (207).

6. Appareil d'identification d'informations audio, comprenant :
un processeur (702) ;
une mémoire (704) pour mémoriser des instructions exécutables par le processeur ;
dans lequel le processeur est configuré pour exécuter le procédé selon l'une quelconque des revendications 1 à 5.

7. Programme informatique comportant des instructions qui amènent un ordinateur à exécuter les étapes d'un procédé d'identification d'informations audio selon l'une quelconque des revendications 1 à 5 quand ledit programme est exécuté par l'ordinateur.

8. Support d'enregistrement lisible par un ordinateur et sur lequel est enregistré un programme informatique comportant des instructions qui, à leur exécution par un ordinateur, amènent l'ordinateur à exécuter les étapes d'un procédé d'identification d'informations audio selon l'une quelconque des revendications 1 à 5.
